# EUROPÄISCHE PATENTSCHRIFT

(11) **EP 2 279 796 B1**
(45) Veröffentlichungstag und Bekanntmachung des Hinweises auf die Patenterteilung: **30.12.2020**
(21) Anmeldenummer: 10185752.2
(22) Anmeldetag: 01.10.2003
(51) Int. Cl.: B05B 7/14, B65G 53/52, B65G 53/28

(54) **VERFARHEN UND VORRICHTUNG ZUM FÖRDERN VON PULVERFÖRMIGEM MATERIAL**
METHOD AND DEVICE FOR CONVEYING POWDER MATERIAL
PROCÉDÉ ET DISPOSITIF DE TRANSPORT DE MATÉRIAUX SOUS FORME DE POUDRE

(30) Priorität: 14.10.2002 DE 10247829; 24.12.2002 DE 10261053
(43) Veröffentlichungstag der Anmeldung: 02.02.2011
(62) Dokumentnummer(n) der früheren Anmeldung(en) nach Art. 76 EPÜ: 03816207.9 / 1 551 558
(73) Patentinhaber: H. Börger & Co. GmbH, 25337 Elmshorn (DE)
(72) Erfinder: Kleineidam, Andreas, 25337, Elmshorn (DE); Kleineidam, Wilhard, 22529, Hamburg (DE)
(74) Vertreter: Weidner Stern Jeschke

(56) Entgegenhaltungen:
- JP-A- H0 971 325
- US-A- 3 788 368

## Beschreibung

Die Erfindung betrifft ein Verfahren und eine Vorrichtung zum Fördern von pulverförmigem Material gemäß dem Oberbegriff des Patentanspruchs 4 bzw. 1. Das Verfahren und die Vorrichtung werden insbesondere in Pulverlackieranlagen eingesetzt, um Pulverlack mittels Druckluft im Dichtstrom aus einem Vorratsbehälter in eine Förderleitung und durch diese zu einer Sprühpistole oder einer anderen Sprühauftragsvorrichtung zu fördern.

Bisher wurde in Pulverlackieranlagen der Pulverlack gewöhnlich pneumatisch im Dünnstromverfahren durch schlauchförmige Förderleitungen aus einem Vorratsbehälter zur Sprühpistole gefördert. Dies bereitet jedoch Probleme, erstens weil relativ große Druckluftmengen benötigt werden, zweitens weil der Durchmesser der schlauchförmigen Förderleitung verhältnismäßig groß sein muss, und drittens infolge von Verschleißproblemen im Bereich abknickender Förderwege. Aus diesem Grund wurden in den vergangenen Jahren in einigen Pulverlackieranlagen Versuche mit der sogenannten Pfropfen- oder Dichtstromförderung unternommen, bei welcher der Pulverlack zyklisch entweder durch Schwerkraft oder mittels Unterdruck in eine Kammer eingebracht und dann mit Druckluft wieder aus der Kammer ausgestoßen und in Form von aufeinanderfolgenden "Pfropfen" durch die Förderleitung zur Sprühauftragsvorrichtung gefördert wird.

Ein Verfahren und eine Vorrichtung der eingangs genannten Art zur Pfropfen- oder Dichtstromförderung von pulverförmigen Stoffen mit Ansaugung durch Unterdruck ist bereits aus der DE 196 43 523, der DE 196 54 649 oder der EP 0 937 004 B1 bekannt. Die bekannte Vorrichtung weist eine zylindrische Pumpkammer auf, die an ihrem unteren Stirnende mit einer Austragsöffnung für das Fördergut und an ihrem oberen Stirnende mit einem für das Fördergut undurchlässigen plattenartigen Filterelement versehen ist, durch das die Pumpkammer abwechselnd mit einer Vakuumpumpe bzw. mit einer Druckgasquelle verbunden werden kann, um zum Befüllen der Pumpkammer Fördergut aus einem Vorratsbehälter durch einen seitlich in die Pumpkammer mündenden Stutzen anzusaugen bzw. um zum Entleeren der Pumpkammer das darin befindliche Fördergut durch die Austragsöffnung in eine Austragsleitung zu drücken. Um eine genaue Dosierung des Förderguts und gleichzeitig eine hohe Fördermenge zu ermöglichen, sollte die Pumpkammer ein möglichst geringes Füllvolumen aufweisen und in einem möglichst kurzen Arbeitszyklus befüllt und entleert werden. Um das letztere zu erreichen, muss jedoch das Gas verhältnismäßig schnell aus der Pumpkammer abgesaugt bzw. in die Pumpkammer zugeführt werden, wozu eine möglichst hohe Druckdifferenz zwischen dem Inneren der Pumpkammer und der Vakuumquelle bzw. der Druckgasquelle erforderlich ist. Eine hohe Druckdifferenz am Filterelement führt jedoch zu einer stärkeren Biege- und Druckbelastung des letzteren und damit zu einer Verkürzung seiner Lebensdauer, weshalb das Filterelement mit Stützgittern oder dergleichen abgestützt werden muss. Dies wiederum führt jedoch zu einer Verringerung seines Durchlassquerschnitts, weshalb man die Wahl zwischen einer stärkeren Belastung und damit einer kürzeren Lebensdauer des Filterelements und einem höheren Gasdurchsatz und damit einem kürzeren Arbeitszyklus hat. Bei der pneumatischen Förderung von Pulverlack kommt hinzu, dass dieser eine Korngröße < 80 µm aufweist, wobei etwa 10 bis 15 % in einem Korngrößenbereich < 5 µm liegen. Da dies im Bereich des Porendurchmessers der verwendeten Filtermaterialien liegt, können Partikel mit kleiner Korngröße tief in das Filterelement eindringen oder dieses sogar passieren. Einige der zuerst genannten Partikel bleiben beim anschließenden Beaufschlagen mit dem Druckgas im Filterelement zurück, wo sie sich ggf. erst nach längerer Zeit wieder lösen, was bei einem Farbwechsel zu Verunreinigungen der lackierten Oberflächen führen kann. Die zuletzt genannten Partikel können zumindest bei Verwendung von Membranpumpen als Unterdruckerzeuger zu deren Beschädigung führen. Ein geringerer Porendurchmesser zur Vermeidung dieser Probleme würde jedoch wiederum einen geringeren Gasdurchsatz und damit längere Arbeitszyklen zur Folge haben. Außerdem können bei der bekannten Vorrichtung beim Entleeren der Kammer auch innerhalb des Ansaugstutzens Farbreste zurückbleiben, was bei einem Farbwechsel ebenfalls Lackverunreinigungen zur Folge haben kann.

Aus der JP H09 07135 A ist bereits eine Vorrichtung der eingangs genannten Art bekannt. Der Ringraum zwischen dem Filterelement und dem Gehäuse ist dort durch einen einzigen, etwa in der Mitte zwischen dem einlassseitigen und dem auslassseitigen Stirnende des Filterelements befindlichen Anschluss abwechselnd mit einer Unterdruckquelle bzw. einer Druckluftquelle verbindbar.
Aus der US 3 788 368 A sind eine Vorrichtung und ein Verfahren zum Befüllen eines Behälters mit verdichtetem pulverförmigen Material bekannt, wobei ein Ringraum zwischen einem Filterelement und einem Gehäuse der Vorrichtung durch zwei Anschlüsse mit einer Unterdruckquelle oder einer Druckluftquelle verbindbar ist. Der mit der Druckquelle verbindbare Anschluss ist in der Nähe des auslasseitigen Stirnendes des Filterelements angeordnet, während der mit der Unterdruckquelle verbindbare Anschluss näher beim einlassseitigen Stirnende des Filterelement angeordnet ist.

Ausgehend hiervon liegt der Erfindung die Aufgabe zugrunde, ein Verfahren und eine Vorrichtung der eingangs genannten Art dahingehend zu verbessern, dass eine Steigerung der Förderleistung ermöglicht wird.

Diese Aufgabe wird erfindungsgemäß durch die Merkmalskombination der Ansprüche 4 und 1 gelöst. Das gasdurchlässige Filterelement ist ein Hohlzylinder, der einen Teil der Umfangswand der Kammer bildet. Durch diese Maßnahme lässt sich auf einfache Weise die Filterfläche des Filterelements vergrößern und damit die Druckdifferenz zwischen der äußeren und der inneren Oberfläche des Filterelements bei gleichem Gasdurchsatz verkleinern, ohne dass dadurch das Volumen der Kammer vergrößert und demzufolge die Dosiergenauigkeit verschlechtert wird. Ein als Umfangswandabschnitt ausgebildetes Filterelement gestattet es außerdem, in axialer Richtung geradlinig durch die Kammer zu fördern, wodurch eine reibungslosere Förderung gewährleistet wird. Darüber hinaus sind außer am Ein- und Auslass der Kammer keine bewegten Teile erforderlich.

Das hohlzylindrische Filterelement besteht zweckmäßig aus einem Sintermaterial, vorzugsweise aus gesinterten Kunststoffpulver, da bei Verwendung derartiger starrer Filtermaterialien auf ein Stützmaterial verzichtet werden kann. Ein zylindrisches Filterelement aus einem starren Filtermaterial weist zudem eine höhere Stabilität als ein ebenes Filterelement gleicher Größe auf und kann daher bei entsprechender Durchlässigkeit mit geringerer Wandstärke gefertigt werden. Zweckmäßig ist die Porengröße des Sintermaterials kleiner als die kleinste Korngröße des geförderten pulverförmigen Materials, das heißt bei der Förderung von Pulverlack vorzugsweise kleiner als 5 µm.

Um eine gleichmäßige Beaufschlagung mit Unterdruck bzw. Druckgas sicherzustellen, ist das Filterelement von einem Gehäuse umgeben, das durch einen zylindrischen Ringraum vom Filterelement getrennt ist. Der Ringraum ist abwechselnd mit einer Unterdruckquelle bzw. einer Druckgasquelle verbindbar, und zwar erfindungsgemäß durch zwei Anschlüsse, von denen der eine in der Nähe seines dem Auslass zugewandten Stirnendes angeordnet und mit Unterdruck beaufschlagbar ist, während der andere in der Nähe seines dem Einlass zugewandten Stirnendes angeordnet und mit Druckgas beaufschlagbar ist. Mit der zuletzt genannten Anordnung wird infolge einer schnelleren Befüllung der Kammer und eines größeren Füllgrades sowie infolge einer schnelleren und vollständigeren Entleerung der Kammer eine beträchtliche Steigerung der Förderleistung ermöglicht.

Eine weitere Steigerung der Förderleistung kann durch Auswahl eines optimalen Verhältnisses zwischen der Länge und dem Innendurchmesser des hohlzylindrischen Filterelements erreicht werden, das vorzugsweise im Bereich zwischen 10 und 30 liegen sollte.

Durch Versuche hat sich gezeigt, dass verhältnismäßig kurze Arbeitszyklen von weniger als 0,5 s zwischen zwei aufeinanderfolgenden Ansaugvorgängen ohne Beeinträchtigung der Lebensdauer des Filterelements möglich sind, wenn sich das letztere über mehr als ein Drittel der Länge der Kammer zwischen dem Einlass und dem Auslass erstreckt und vorzugsweise eine Länge aufweist, die etwa der Hälfte der Länge der Kammer entspricht.

Eine weitere bevorzugte Ausgestaltung der Erfindung sieht vor, dass die an die beiden Stirnenden des Filterelements angrenzenden zylindrischen Umfangswandabschnitte der Kammer nachgiebig ausgebildet sind, und dass der Einlass und der Auslass im Bereich der nachgiebigen Umfangswandabschnitte angeordnet sind und jeweils durch ein pneumatisch arbeitendes Quetschventil gasdicht geschlossen werden.

Der Einlass und der Auslass der Förderkammer sind erfindungsgemäß an deren entgegengesetzten Stirnenden angeordnet, so dass bei Verwendung einer einzigen abwechselnd mit Druckgas und Unterdruck beaufschlagten Kammer der Förderweg im Bereich der letzteren geradlinig, d.h. ohne Knickstellen oder Biegungen, verlaufen kann. Ein möglichst kleiner Druckabfall entlang des Förderwegs wird auch dadurch erreicht, dass das Filterelement und die übrige Kammer einen im Wesentlichen dem Innendurchmesser einer Beschickungsleitung zwischen dem Vorratsbehälter und der Kammer bzw. der Förderleitung entsprechenden Innendurchmesser aufweist und so der Förderweg keine größeren Querschnittsveränderungen unterliegt.

Gemäß der Erfindung erfolgt die Zufuhr des Druckgases in die Kammer während der Förderung des pulverförmigen Materials durch das Filterelement hindurch, um die der Kammer zugewandte Innenseite desselben von anhaftendem pulverförmigem Material zu reinigen. Da es infolge einer triboelektrischen Aufladung des pulverförmigen Materials bei der Förderung jedoch auch an anderen Stellen in der Kammer zu einer elektrostatischen Anhaftung von Pulverpartikeln kommen kann, für deren Abreinigung der durch das Filterelement hindurch erzeugte Druckgasstoß gegebenenfalls nicht ausreicht, wird zur Reinigung zweckmäßig Druckgas am Filterelement vorbei durch ein Reinigungsventil in die Kammer zugeführt.

Um zu verhindern, dass pulverförmiges Material durch dieses Reinigungsventil hindurch aus der Kammer austritt, wenn die Kammer bei der Förderung durch das Filterelement hindurch mit Druckgas beaufschlagt wird, weist das Reinigungsventil vorzugsweise eine Membran auf, die während der Zufuhr von Druckgas durch das Reinigungsventil elastisch verformt wird und eine Eintrittsöffnung für das Druckgas in die Kammer freigibt und die sich bei Beendigung der Druckgaszufuhr durch das Reinigungsventil in ihre ursprüngliche Gestalt zurückverformt, in der sie die Eintrittsöffnung dicht verschließt. Die Membran kann zum Beispiel von einem gummielastischen Schlauchstück gebildet werden, das über die mit Durchtrittsöffnungen versehene Umfangswand eines an seinem freien Stirnende geschlossenen Rohrstutzens gezogen ist und bei der Zufuhr von Druckgas ins Innere des Rohrstutzens durch den Gasdruck von dessen Umfangsfläche abgehoben wird, so dass das Druckgas zwischen der Membran und der Umfangswand hindurch in die Kammer strömen kann.

Während es grundsätzlich möglich wäre, den zur Ansaugung von pulverförmigem Material in die Kammer erforderlichen Unterdruck mittels einer Membranpumpe zu erzeugen, sieht eine weitere bevorzugte Ausgestaltung der Erfindung vor, einen sogenannten Vakuuminjektor zu verwenden, der mit Druckluft aus der Druckluftquelle beaufschlagt wird und nach dem Venturi-Prinzip einen Unterdruck erzeugt.

Um einen noch schnelleren Arbeitstakt zu erreichen, ist die Vorrichtung zweckmäßig in bekannter Weise mit zwei Kammern versehen, von denen jeweils immer eine gefüllt wird, während die andere entleert wird. Die beiden Kammern sind in diesem Fall vorzugsweise parallel zueinander ausgerichtet und durch Y-förmige Leitungsabschnitte mit einer gemeinsamen Beschickungs- bzw. Förderleitung verbunden, wobei die Winkel zwischen dem Fuß und den beiden Armen des Y und an den Enden der Arme am Übergang zu den parallelen Kammern vorzugsweise jeweils kleiner als 30 Grad sind, um eine möglichst unbehinderte Materialförderung mit geringen Druckverlusten sicherzustellen.

Um die Konstruktion der Vorrichtung mit Doppelkammer zu vereinfachen, werden die Einlässe und die Auslässe beider Kammern mit nur zwei Verschlussmechanismen geöffnet und geschlossen, von denen einer den Einlass der ersten Kammer schließt und gleichzeitig den Einlass der zweiten Kammer öffnet und der andere den Auslass der zweiten Kammer öffnet und gleichzeitig den Auslass der ersten Kammer schließt. Die beiden Verschlussmechanismen umfassen zweckmäßig jeweils einen doppeltwirkenden Pneumatikzylinder mit zwei entgegengesetzten Kolbenstangen, deren freie Enden die nachgiebige Wand der benachbarten Kammer eindrücken, um deren Einlass bzw. Auslass zu verschließen.

Die Pneumatikzylinder sind vorzugsweise mittels zweier elektromagnetischer Mehrwege-Schaltventile in ihren Druckluftzufuhrleitungen ansteuerbar, so dass es möglich ist, zu Reinigungszwecken den Einlass und den Auslass einer Kammer gleichzeitig zu öffnen, zum Beispiel um diese Kammer zusammen mit der Beschickungsleitung und der Förderleitung vom Vorratsbehälter aus auszublasen.
Eine weitere Vereinfachung der Konstruktion der Doppelkammer-Vorrichtung ist dadurch möglich, dass zur gleichzeitigen Beaufschlagung von einer Kammer mit Unterdruck und der anderen Kammer mit Druckgas ein einziges Vier- oder Fünfwege-Schaltventil verwendet wird, von dessen zwei bzw. drei Eingängen einer mit einer Druckluftquelle und der bzw. die anderen mit einem vorzugsweise als Vakuuminjektor ausgebildeten Unterdruckerzeuger verbunden sind, während seine beiden Ausgänge jeweils mit einer der Kammern verbunden sind und durch Umschaltung des Ventils abwechselnd mit dem Druckluft-Eingang bzw. einem der Unterdruck-Eingänge verbunden werden.
Im folgenden wird die Erfindung anhand eines in der Zeichnung dargestellten Ausführungsbeispiels näher erläutert. Es zeigen:
Fig. 1: eine Draufsicht auf eine Vorrichtung zur pneumatischen Förderung von Pulverlack im Dichtstromverfahren mit zwei Förderkammern;
Fig. 2: eine teilweise geschnittene und etwas schematisierte Ansicht der Vorrichtung entsprechend Fig. 1;
Fig. 3: eine vergrößerte Längsschnittansicht eines Teils von einer der beiden Förderkammern der Vorrichtung;
Fig. 4: ein vereinfachtes Pneumatikschaltbild eines Teils der Vorrichtung;
Fig. 5: eine Schnittansicht eines bevorzugten Unterdruckerzeugers der Vorrichtung;
Fig. 6: eine Längsschnittansicht eines alternativen Reinigungsventils zum Zuführen von Reinigungsdruckluft in die Förderkammern;
Fig. 7: eine Draufsicht auf eine erfindungsgemäße Vorrichtung entsprechend Fig. 1;
Fig. 8: eine Ansicht der Vorrichtung aus Fig. 7 entsprechend Fig. 2;
Fig. 9: eine vergrößerte Längsschnittansicht eines Teils von einer der beiden Förderkammern der Vorrichtung aus Fig. 7 und 8 entsprechend Fig. 3;
Fig. 10: ein vereinfachtes Pneumatikschaltbild eines Teils der Vorrichtung aus den Figuren 7 und 8.

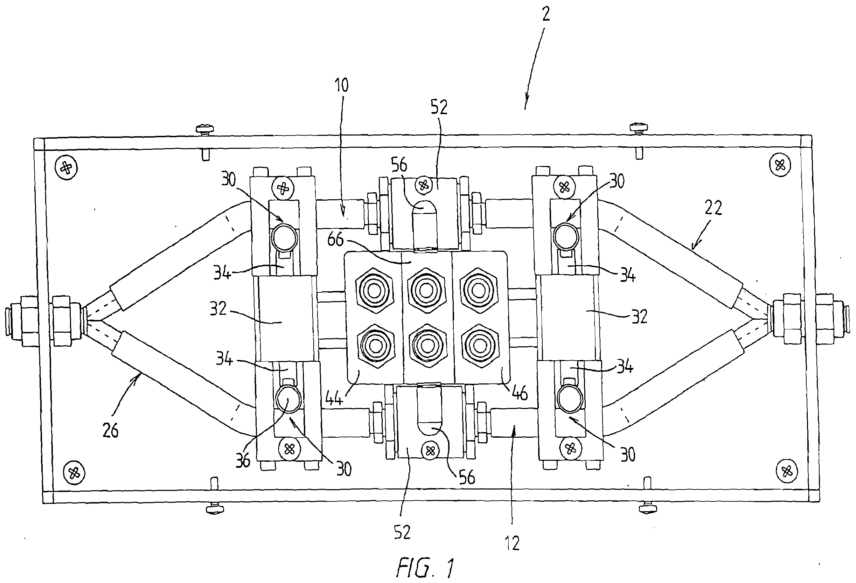

Die in den Figuren 1, 2, 7 und 8 der Zeichnung dargestellten Vorrichtungen 2 dienen dazu, Pulverlack 4 für die elektrostatische Pulverlackierung von Gegenständen pneumatisch im Dichtstromverfahren aus einem Vorratsbehälter 6 zu einer Sprühpistole 8 zu fördern.

Die Vorrichtungen 2 weisen dazu zwei parallele zylindrische Förderkammern 10, 12 auf, deren entgegengesetzte offene Stirnenden jeweils einen Einlass 14, 16 bzw. einen Auslass 18, 20 für den geförderten Pulverlack 4 bilden und mit einem Y-förmigen Leitungsabschnitt 22 einer zum Vorratsbehälter 6 führenden Beschickungsleitung 24 bzw. mit einem Y-förmigen Leitungsabschnitt 26 einer zur Sprühpistole 8 führenden flexiblen Förderleitung 28 verbunden sind.

Jede der beiden Förderkammern 10, 12 ist im Bereich ihres Einlasses 14, 16 und ihres Auslasses 18, 20 mittels eines Quetschventils 30 verschließbar. Die Quetschventile 30 für die beiden Einlässe 14, 16 sind ebenso wie die Quetschventile 30 für die beiden Auslässe 18, 20 jeweils mittels eines zwischen den beiden Förderkammern 10, 12 angeordneten doppeltwirkenden Pneumatikzylinders 32 betätigbar. Die Pneumatikzylinder 32 weisen jeweils zwei Kolbenstangen 34 auf, die nach entgegengesetzten Seiten überstehen und deren sphärisch gerundete freie Enden 36 am Einlass 14, 16 bzw. am Auslass 18, 20 durch Ausnehmungen 38 in einem starren zylindrischen Außenwandabschnitt 40 der benachbarten Förderkammer 10, 12 hindurch mit einem elastisch verformbaren nachgiebigen Innenwandabschnitt 42 der Kammer 10, 12 in Eingriff treten, um diesen gegen einen gegenüberliegenden Kammerwandteil zu drücken und den Einlass 14, 16 bzw. den Auslass 18, 20 luftdicht zu verschließen. Außer im Bereich der Ausnehmungen 38 sind die elastischen Innenwandabschnitte 42 fest mit den starren Außenwandabschnitten verbunden, um ihre Kontraktion beim Anlegen eines Unterdrucks in der Kammer 10, 12 zu verhindern.

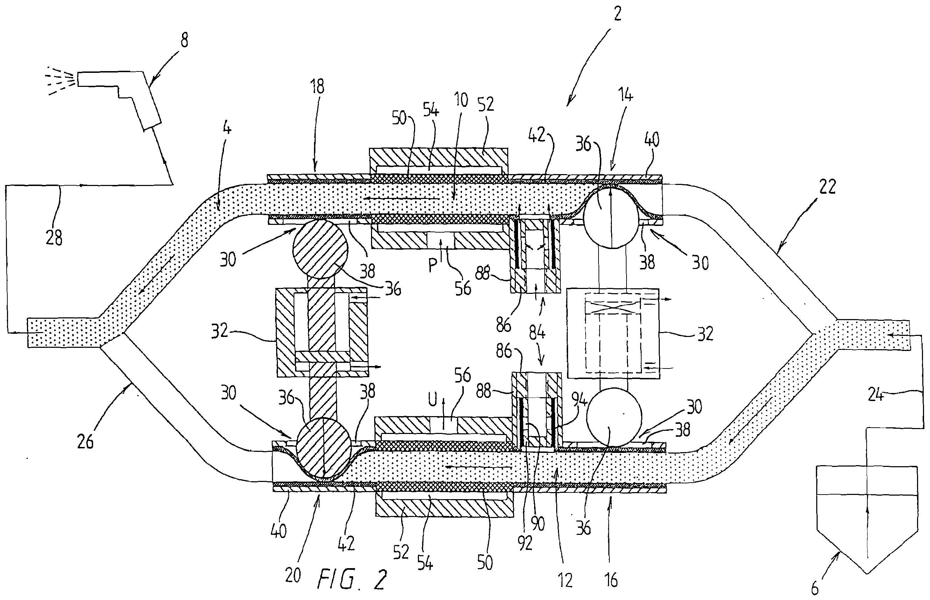

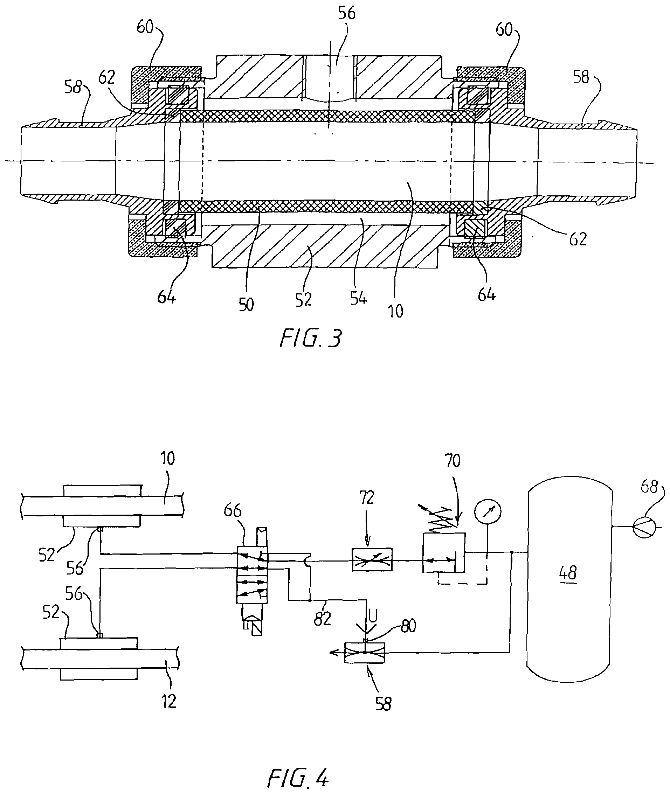

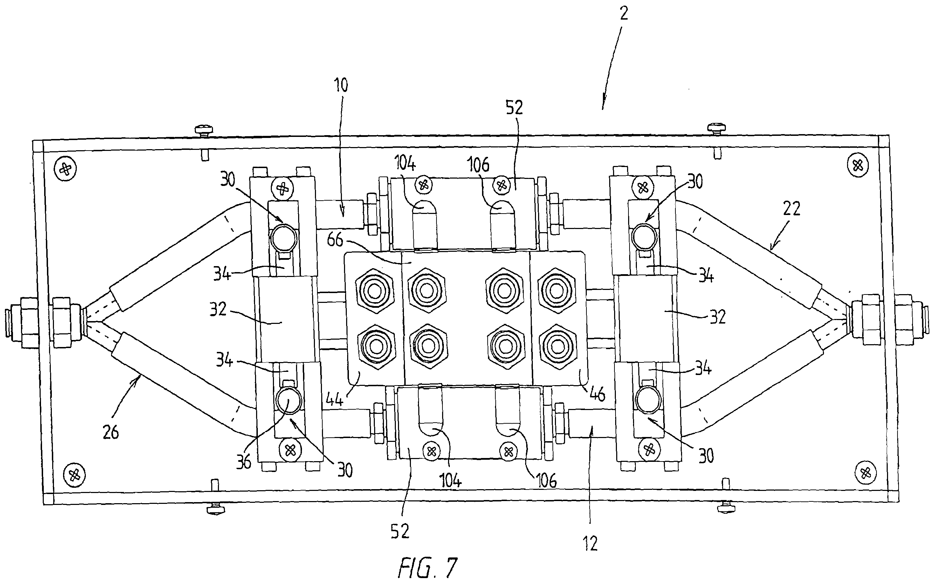

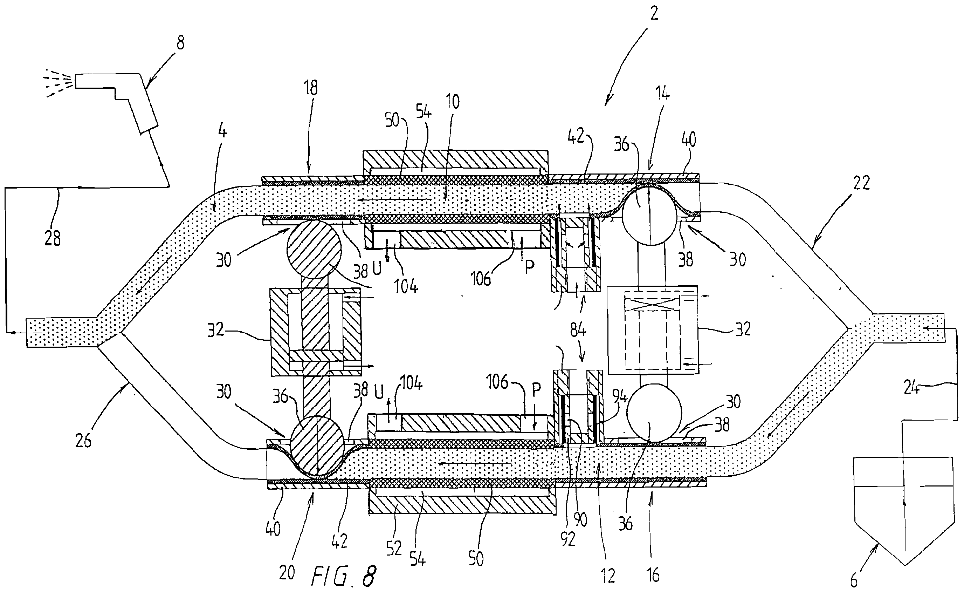

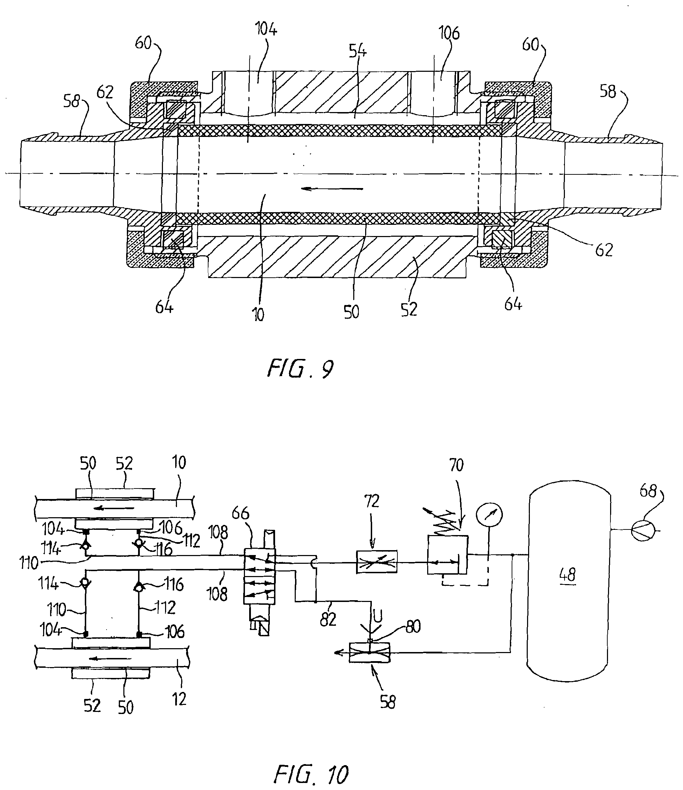

Die beiden Pneumatikzylinder 32 sind jeweils durch ein elektromagnetisches Mehrwege-Schaltventil 44, 46 (Figuren 1 und 7) mit einem Druckluftbehälter 48 (Figuren 4 und 10) verbunden. Im Förderbetrieb werden die beiden Schaltventile 44, 46 immer so geschaltet, dass die Pneumatikzylinder 32 kreuzweise mit Druckluft beaufschlagt werden, so dass bei einer Kammer 10 der Einlass 14 geöffnet und der Auslass 18 geschlossen ist, während bei der anderen Kammer 12 der Einlass 16 geschlossen und der Auslass 20 geöffnet ist, oder umgekehrt (wie in den Figuren 2 und 8 dargestellt).

Um ein Ansaugen von Pulverlack 4 aus dem Vorratsbehälter 6 in die Kammer 10 bzw. 12 mit dem geöffneten Einlass 14 bzw. 16 und ein Ausstoßen des angesaugten Pulverlacks 4 aus der Kammer 12 bzw. 10 mit dem geöffneten Auslass 20 bzw. 18 in die Förderleitung 28 zu ermöglichen, sind die beiden Kammern 10, 12 jeweils mit einem luftdurchlässigen und für Pulverlack 4 undurchlässigen hohlzylindrischen Filterelement 50 versehen, das die Kammer 10, 12 zwischen ihrem Einlass 14, 16 und ihrem Auslass 18, 20 auf einem Teil ihrer Länge in Umfangsrichtung begrenzt und einen Umfangswandabschnitt der Kammer 10, 12 bildet.

Das hohlzylindrische Filterelement 50 besteht aus gesintertem Polyethylen mit einer Wanddicke zwischen 2 und 4 mm und einer Porengröße von etwa 5 µm und weist einen Innendurchmesser zwischen 5 und 30 mm auf, .der im Wesentlichen dem Innendurchmesser der an beiden Seiten angrenzenden Wandabschnitte 40, 42, der Y-förmigen Leitungsabschnitte 22 und 26 sowie der Beschickungsleitung 24 und der Förderleitung 28 entspricht. Das Filterelement 50 erstreckt sich etwa über die halbe Kammerlänge (zwischen den Mitten der Quetschventile 30 gemessen), wobei es zweckmäßig eine Länge zwischen 20 und 70 mm aufweist. An seinen beiden Stirnenden ist das Filterelement luftdicht mit dem jeweils anschließenden Umfangswandabschnitt 40, 42 verbunden.

Wie am besten in den Figuren 3 und 9 dargestellt, ist jedes Filterelement 50 von einem Gehäuse 52 umgeben, das durch einen zylindrischen Ringraum 54 vom Filterelement 50 getrennt ist. Bei der Vorrichtung aus den Figuren 1 und 2 weist das Gehäuse 52 einen Anschluss 56 auf, der abwechselnd mit Unterdruck aus einem Unterdruckerzeuger 58 (Fig. 4) und mit Druckluft aus dem Druckluftbehälter 48 (Fig. 4) beaufschlagbar ist. An den beiden entgegengesetzten Stirnenden des Gehäuses 52 und des Filterelements 50 ist jeweils ein Schlauchstutzen 58 vorgesehen, auf den der anschließende elastisch nachgiebige Umfangswandabschnitt 42 aufgeschoben und mittels Schlauchschellen (nicht dargestellt) befestigt werden kann. Die Schlauchstutzen sind 58 durch Überwurfmuttern 60 mit dem Gehäuse 52 verschraubt. Zwischen den Schlauchstutzen 58 und das Filterelement 50 bzw. das Gehäuse 52 eingesetzte Dichtringe 62, 64 sorgen dafür, dass bei der Beaufschlagung der Kammer 10, 12 mit Druckluft in diesem Bereich keine Druckluft aus der Kammer 10, 12 oder aus dem Ringraum 54 des Gehäuses 52 entweicht und bei der Beaufschlagung der Kammer 10, 12 mit Unterdruck keine Luft von außen in die Kammer 10, 12 oder in den Ringraum 54 eintritt.

Wie am besten in Fig. 4 dargestellt, wird der Druckluft-/Unterdruck-Anschluss 56 um Gehäuse 52 jeder Förderkammer 10, 12 über ein elektromagnetisches 5-Wege-Schaltventil 66 abwechselnd mit dem Unterdruckerzeuger 58 und mit dem Druckluftbehälter 48 verbunden, um die jeweilige Kammer 10, 12 zur Ansaugung von Pulverlack 4 aus dem Vorratsbehälter 6 bei geöffnetem Einlass 14 bzw. 16 und geschlossenem Auslass 18 bzw. 20 mit Unterdruck zu beaufschlagen bzw. den in die Kammer 10, 12 gesaugten Pulverlack 4 bei geschlossenem Einlass 14 bzw. 16 und geöffnetem Auslass 18 bzw. 20 durch Zufuhr von Druckluft in die Kammer 10, 12 aus der Kammer 10, 12 auszustoßen und im Dichtstrom- oder sogenannten Pfropfen-Förderverfahren durch die Förderleitung 28 zu drücken.

Der durch einen Verdichter 68 mit Druckluft befüllbare Druckluftbehälter 48 ist über einen Druckregler 70 und eine Drossel 72 mit einem der drei Eingänge des 5-Wege-Schaltventils 66 verbunden. Die beiden anderen Eingänge des 5-WegeSchaltventils 66 sind durch eine Leitung 82 mit dem Unterdruckerzeuger 58 verbunden, der bei dem in der Zeichnung dargestellten Ausführungsbeispiel als Vakuuminjektor ausgebildet ist.

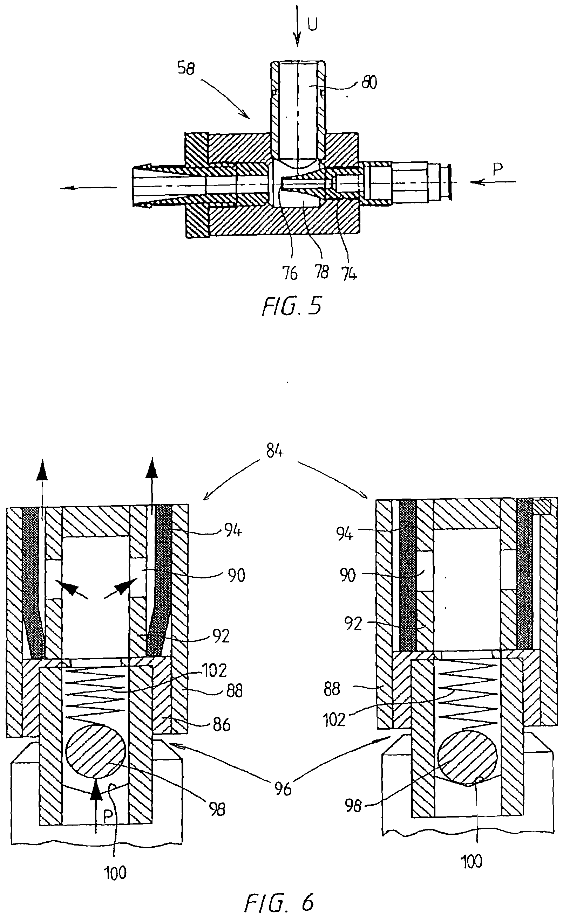

Wie am besten in Fig. 5 dargestellt, weist der Vakuuminjektor 58 eine mit Druckluft P aus dem Druckluftbehälter 48 gespeiste Injektordüse 74 auf. Bei der Zufuhr von Druckluft in die Injektordüse 74 wird nach dem Venturi-Prinzip in einem den Auslass 76 der Injektordüse 74 umgebenden Ringraum 78 ein Unterdruck erzeugt, der über einen Anschlussstutzen 80 und die Leitung 82 an den beiden mit dem Unterdruckerzeuger 58 verbundenen Einlässen des 5-Wege-Schaltventils 66 und bei jedem Umschalten desselben abwechselnd an jeweils einer der beiden Kammern 10, 12 angelegt wird, während die jeweils andere Kammer 12, 10 gleichzeitig mit Druckluft beaufschlagt wird.

An Stelle eines 5-Wege-Schaltventils könnte auch ein 4-Wege-Schaltventil verwendet werden, 'von dessen beiden Eingängen einer mit dem Druckluftbehälter 48 und der andere mit dem Unterdruckerzeuger 58 verbunden ist, während die beiden Ausgänge jeweils mit einer der beiden Kammern 20, 12 verbunden sind, so dass diese bei jedem Umschalten des Ventils abwechselnd mit Druckluft bzw. mit Unterdruck beaufschlagt werden.

Zeitgleich mit dem Umschalten des 5-Wege-Schaltventils 66 werden auch die beiden Mehrwege-Schaltventile 44, 46 (Fig. 1) in den Druckluftzuleitungen der Pneumatikzylinder 32 umgeschaltet, um bei der unmittelbar zuvor entleerten Kammer 10 bzw. 12 den Auslass 18 bzw. 20 zu schließen und den Einlass 14 bzw. 16 zu öffnen, sowie bei der unmittelbar zuvor befüllten Kammer 12 bzw. 10 den Einlass 16 bzw. 14 zu schließen und den Auslass 20 bzw. 18 zu öffnen.

Wie am besten in Fig. 2 dargestellt, wird durch das Anlegen eines Unterdrucks U bei geöffnetem Einlass 16 Pulverlack 4 aus dem Vorratsbehälter 6 bzw. aus der Beschickungsleitung 24 in die eine Kammer 12 gesaugt, während die durch das Filterelement 50 in die andere Kammer 10 zugeführte Druckluft P den zuvor in diese Kammer 10 angesaugten Pulverlack 4 durch den Auslass 18 und durch den einen Arm des Y-förmigen Leitungsabschnitts 26 in die Förderleitung 28 drückt. Um für eine möglichst reibungslose Förderung ohne größere Druckverluste zu sorgen, ist der Y-förmige Leitungsabschnitt 26 ebenso wie der Y-förmige Leitungsabschnitt 22 im Bereich seiner Biegungen, d.h. an den Verbindungsstellen zwischen dem Fuß und den beiden Armen des Y sowie zwischen dem jeweiligen Arm und dem Einlass 14, 16 der zugehörigen Kammer 10, 12 jeweils um weniger als 30 Grad gekrümmt.

Die während der Förderung durch das Filterelement 50 in die jeweilige Kammer 10, 12 zugeführte Druckluft drückt nicht nur den in der Kammer 10, 12 enthaltenen Pulverlack 4 in die Förderleitung 28, sondern reinigt auch die zylindrische innere Oberfläche des Filterelements 50 von anhaftendem Pulverlack 4, der infolge des zuvor angelegten Unterdrucks an diese Oberfläche angesaugt worden ist. Es hat sich jedoch gezeigt, dass der beim Beaufschlagen der Kammer 10, 12 mit Druckluft innerhalb der Kammer 10, 12 erzeugte Druckstoß nicht immer ausreicht, um auch die übrigen inneren Oberflächen der Kammer 10, 12 von Pulverpartikeln zu reinigen, da diese infolge einer triboelektrischen Aufladung relativ fest an den Oberflächen der Kammer 10, 12 haften können.

Grundsätzlich ist es zwar möglich, zur Reinigung einer Förderkammer, beispielsweise der Kammer 10, durch eine entsprechende Schaltung der Mehrwege-Schaltventile 44, 46 der Pneumatikzylinder 32 sowohl den Einlass 14 und den Auslass 18 dieser Kammer 10 zu öffnen (und den Einlass 16 und den Auslass 20 der anderen Kammer 12 zu schließen), um diese Kammer 10 dann zusammen mit der Förderleitung 26 und der Beschickungsleitung 24 vom Vorratsbehälter 6 oder von der Sprühpistole 8 her auszublasen.

Da eine derartige Reinigung des gesamten Förderstrangs jedoch nicht immer erwünscht ist, sind die beiden Kammern 10, 12 jeweils mit einem zusätzlichen Reinigungsventil 84 (Figuren 2 und 9) versehen, durch das Druckluft zur Reinigung der Kammer 10, 12 ins Innere derselben eingeblasen werden kann. Das zwischen dem Filterelement 50 und dem Einlass 14, 16 (oder dem Auslass 18, 20) radial von der Seite her in die Kammer 10, 12 mündende Reinigungsventil 84 besteht im Wesentlichen aus einem metallischen Rohrnippel 86 mit ringförmigem Querschnitt, der mittels eines Außengewindes auf seinem von der Kammer 10, 12 abgewandten dickeren Ende luftdicht in eine Innengewindebohrung eines über die Kammerwand 42 überstehenden Rohrstutzens 88 eingeschraubt ist und dessen der Kammer 10, 12 zugewandtes dünneres Ende stirnseitig geschlossen ist und in seiner zylindrischen Umfangswand 92 mehrere radiale Bohrungen 90 aufweist (vgl. auch Fig. 6). Auf dem dünneren Ende des Nippels 86 ist eine Membran in Form eine Schlauchstücks 94 aus einem gummielastischen Material befestigt, die unter Zugspannung lose gegen seine äußere Umfangsfläche anliegt und die Bohrungen 90 verschließt, wie in den Figuren 2 und 9 unten dargestellt. Während der Zufuhr von Druckluft in das Reinigungsventil 84 wird die Membran 94 durch die Druckluft von der äußeren Umfangsfläche des Nippels 86 abgehoben, so dass die Druckluft zwischen der Membran 94 und dieser Umfangsfläche hindurch in die Kammer 10 strömen kann, wie in den Figuren 2 und 9 oben dargestellt. Bei Beendigung der Druckluftzufuhr legt sich die verformte Membran 94 infolge ihrer elastischen Rückstellkraft wieder gegen die Umfangsfläche des Nippels 86 an und verhindert, dass bei einer späteren Beaufschlagung der Kammer 10, 12 mit Druckluft Pulverlack 4 durch das Reinigungsventil 84 hindurch austreten kann.

Bei dem in Fig. 6 vergrößert dargestellten Reinigungsventil 84 ist zusätzlich zu der Membran ein Kugelrückschlagventil 96 vorgesehen, dessen Kugel 98 bei der Zufuhr von Druckluft in das Ventil 96 entgegen der Kraft einer Feder 102 aus ihrem Sitz gedrückt wird.

Im Unterschied zu der Vorrichtung 2 aus den Figuren 1 bis 6 ist bei der Vorrichtung 2 in den Figuren 7 bis 10 das Gehäuse 52 jedes Filterelements 50 mit zwei Anschlüssen 104 bzw. 106 versehen. Während der eine Anschluss 104 in der Nähe des auslassseitigen Stirnendes des Filterelements 50 angeordnet ist und mit Unterdruck beaufschlagbar ist, ist der andere Anschluss 106 in der Nähe des einlassseitigen Stirnendes des Filterelements 50 angeordnet und mit Druckluft P aus dem Druckluftbehälter 48 beaufschlagbar.

Wie am besten in Fig. 10 dargestellt, verzweigt sich dazu eine Leitung 108 zwischen dem 5-Wege-Schaltventil 66 und dem Gehäuse 52 jedes Filterelements 50, wobei in die beiden zu den Anschlüssen 104 bzw. 106 führenden Abzweigleitungen 110 und 112 jeweils ein federbelastetes Rückschlagventil 114, 116 mit umgekehrter Einbaurichtung eingesetzt ist, so dass sich bei Zufuhr von Druckluft in die Leitung 108 das vor dem Anschluss 106 angeordnete Rückschlagventil 116 entgegen der Federkraft öffnet, während das vor dem Anschluss 104 angeordnete Rückschlagventil 114 geschlossen bleibt. Umgekehrt öffnet sich beim Anlegen eines Unterdrucks in der Leitung 108 das Rückschlagventil 114 entgegen der Federkraft, während das Rückschlagventil 116 geschlossen bleibt.

Um die Förderleistung der Vorrichtung 2 weiter zu steigern, weisen außerdem die hohlzylindrischen Filterelemente 50 bei der Vorrichtung in den Figuren 7 bis 10 eine größere Länge bzw. ein größeres Länge/Innendurchmesser-Verhältnis auf, nämlich eine Länge von 80 bzw. 250 mm bei einem Innendurchmesser von 6 bzw. 12 mm und einer zugehörigen Kammerlänge zwischen der Mitte des einlass- und auslassseitigen Quetschventils" 30 von 180 bzw. 400 mm.

## Patentansprüche

1. Vorrichtung zum pneumatischen Fördern von pulverförmigem Material, insbesondere von Pulverlack, mit einer zylindrischen Förderkammer (10, 12), die abwechselnd durch einen verschließbaren Einlass (14, 16) mit einem Vorratsbehälter und durch einen verschließbaren Auslass (18, 20) mit einer Förderleitung (28) verbindbar ist, wobei die Förderkammer (10, 12) eine von einem gasdurchlässigen Filterelement (50) gebildete Begrenzungswand aufweist und durch das Filterelement (50) mit Unterdruck beaufschlagbar ist, um Gas aus der Förderkammer (10, 12) abzusaugen und die Förderkammer (10, 12) bei geschlossenem Auslass (18, 20) durch den geöffneten Einlass (14, 16) mit Material aus dem Vorratsbehälter (6) zu befüllen, und die mit einem unter Druck stehenden Gas beaufschlagbar ist, um das in die Förderkammer (10, 12) gesaugte Material bei geschlossenem Einlass (14, 16) durch den geöffneten Auslass (18, 20) in die Förderleitung (28) zu drücken, wobei das Filterelement (50) als Hohlzylinder ausgebildet ist und mindestens einen Teil der Förderkammer (10, 12) umschließt,
wobei der Einlass (14, 16) und der Auslass (18, 20) an entgegengesetzten Stirnenden der Förderkammer (10, 12) angeordnet sind,
wobei das Filterelement (50) von einem Gehäuse (52) umgeben ist, das durch einen zylindrischen Ringraum (54) vom Filterelement (50) getrennt ist,
wobei ein erster Anschluss (104) zum Beaufschlagen des zylindrischen Ringraums (54) mit einem Unterdruck U und ein zweiter Anschluss (106) zum Beaufschlagen des zylindrischen Ringraums (54) mit Druckluft P angeordnet sind,
**dadurch gekennzeichnet, dass**
der erste Anschluss (104) in der Nähe des auslassseitigen Stirnendes des Filterelements (50) angeordnet ist und der zweite Anschluss (106) in der Nähe des einlassseitigen Stirnendes des Filterelements (50) angeordnet ist.

2. Vorrichtung nach Anspruch 1, mit
einem 5-Wege-Schaltventil (66), das wahlweise den ersten Anschluss (104) mit einem Unterdruck U beaufschlagt und den zweiten Anschluss (106) mit Überdruck beaufschlagt,
wobei in zwei zu den Anschlüssen (104, 106) führenden Abzweigleitungen (110, 112) jeweils ein federbelastetes Rückschlagventil (114, 116) mit umgekehrter Einbaurichtung eingesetzt ist, so dass sich bei Zufuhr von Druckluft in eine Leitung (108) das vor dem Anschluss (106) angeordnete Rückschlagventil (116) entgegen der Federkraft öffnet, während das vor dem Anschluss (104) angeordnete Rückschlagventil (114) geschlossen bleibt.

3. Vorrichtung nach Anspruch 1, wobei der Einlass (14, 16) mit einem Vorratsbehälter (6) mit Pulverlack (4) verbunden ist, Pulverlack (4) in die Förderkammer (10, 12) gefüllt wird, wenn der erste Anschluss (104) mit Unterdruck U beaufschlagt ist und Pulverlack aus der Förderkammer (10, 12) entleert werden kann, wenn der zweite Anschluss (106) mit Druckluft beaufschlagt ist.

4. Verfahren zum pneumatischen Fördern von pulverförmigem Material, mit den Schritten:
- abwechselndes Befüllen einer zylindrischen Förderkammer (10, 12) mit pulverförmigem Material, welche durch einen verschließbaren Einlass (14, 16) mit einem Vorratsbehälter (6) mit einer Förderleitung (28) verbindbar ist, durch den Einlass (14, 16) der Förderkammer (10, 12) und Entleeren des pulverförmigen Materials aus der Förderkammer (10, 12) durch einen Auslass (18, 20), der an einem entgegengesetzten Stirnende der Förderkammer (10, 12) angeordnet ist, für eine axiale Förderung des pulverförmigen Materials durch die Förderkammer (10, 12);
- Beaufschlagen der Förderkammer (10, 12) mit Unterdruck U bei geschlossenem Auslass (18, 20) und bei geöffnetem Einlass (14, 16) durch eine von einem gasdurchlässigen Filterelement (50) gebildete Begrenzungswand an einem ersten Anschluss (104), um pulverförmiges Material aus dem Vorratsbehälter (6) durch den Einlass (14, 16) in die Förderkammer (10, 12) zu saugen,
- Beaufschlagen der Förderkammer (10, 12) mit Druckluft bei geschlossenem Einlass (14, 16) und bei geöffnetem Auslass (18, 20) an einem zweiten Anschluss (106), um das in die Förderkammer (10, 12) gesaugte pulverförmige Material durch den Auslass (18, 20) in die Förderleitung (28) zu drücken,
wobei der erste Anschluss (104) in der Nähe des auslassseitigen Stirnendes des Filterelements (50) und der zweite Anschluss (106) in der Nähe des einlassseitigen Stirnendes des Filterelements (50) angeordnet ist, wobei das Filterelement (50) als Hohlzylinder ausgebildet ist und mindestens einen Teil der Förderkammer (10, 12) umschließt.

## Claims

1. Device for the pneumatic conveyance of powdered material, in particular powder coating material, with a cylindrical conveying chamber (10, 12), which alternately can be connected with a reservoir by a sealable inlet (14, 16) and with a delivery line (28) by a sealable outlet (18, 20), wherein the conveying chamber (10, 12) comprises a bordering wall formed by a gas-permeable filter element (50) and can be applied with negative pressure by means of the filter element (50) to draw gas from the conveying chamber (10, 12) and to fill the conveying chamber (10, 12), with its outlet (18, 20) closed through the inlet opened (14, 16), with material from the reservoir (6), and which can be applied by a pressurized gas, in order to push the material drawn into the conveying chamber (10, 12), with the inlet (14, 16) closed through the outlet (18, 20) opened, into the delivery line (28), wherein the filter element (50) is designed as a hollow cylinder and surrounds at least a portion of the conveying chamber (10, 12),
wherein the inlet (14, 16) and the outlet (18, 20) are arranged on opposite face ends of the conveying chamber (10, 12),
wherein the filter element (50) is surrounded by a housing (52), which is separated from the filter element (50) by a cylindrical annular space (54),
wherein a first connection (104) for the application of the cylindrical annular space (54) with a negative pressure U and a second connection (106) for the application of the cylindrical annular space (54) with compressed air P are arranged,
**characterized in that**
the first connection (104) is arranged near the outlet-side face end of the filter element (50) and the second connection (106) is arranged near the inlet-side face end of the filter element (50).

2. Device according to claim 1, comprising
a five-way control valve (66), which selectively applies the first connection (104) with a negative pressure U and the second connection (106) with a positive pressure, wherein in two branch lines (110, 112) leading to the connections (104, 106) in each case a spring-loaded non-return valve (114, 116) is installed with opposite direction of installation, so that when compressed air is fed into a line (108), the non-return valve (116) arranged upstream of the connection (106) opens against the force of the spring, while the nonreturn valve (114) located in front of the connection (104) remains closed.

3. Device according to claim 1, wherein the inlet (14, 16) is connected to a reservoir (6) with powder coating material (4), powder coating material (4) is filled into the conveying chamber (10, 12) when the first connection (104) is applied with negative pressure U, and powder coating material can be emptied from the conveying chamber (10, 12) when the second connection (106) is applied with compressed air.

4. Method for the pneumatic conveyance of powdered material, comprising the steps of:
- alternately filling of a cylindrical conveying chamber (10, 12) with powdered material, which can be connected by a sealable inlet (14, 16) with a reservoir (6) with a delivery line (28), through the inlet (14, 16) of the conveying chamber (10, 12) and emptying the powdered material from the conveying chamber (10, 12) through an outlet (18, 20) which is arranged on an opposite face end of the conveying chamber (10, 12), for an axial conveyance of the powdered material through the conveying chamber (10, 12);
- applying the conveying chamber (10, 12) with its outlet (18, 20) closed and with its inlet (14, 16) opened, with a negative pressure U through a bordering wall formed by a gas-permeable filter element (50) at a first connection (104), in order to draw powdered material from the reservoir (6) through the inlet (14, 16) into the conveying chamber (10, 12),
- applying the conveying chamber (10, 12) with its inlet (14, 16) closed and with its outlet (18, 20) opened with compressed air at a second connection (106), in order to push the powdered material drawn into the conveying chamber (10, 12) through the outlet (18, 20) into the delivery line (28),
wherein the first connection (104) is arranged near the outlet-side face end of the filter element (50) and the second connection (106) is arranged near the inlet-side face end of the filter element (50), wherein the filter element (50) is formed as a hollow cylinder and surrounds at least a portion of the conveying chamber (10, 12).

## Revendications

1. Dispositif de transport pneumatique de matière pulvérulente, en particulier de peinture en poudre, comprenant une chambre transporteuse (10, 12) cylindrique, qui peut être reliée alternativement à un réservoir par une entrée (14, 16) pouvant être fermée et à un conduit de transport (28) par une sortie (18, 20) pouvant être fermée, la chambre transporteuse (10, 12) comportant une paroi de limitation formée par un élément filtrant (50) perméable aux gaz et pouvant être soumise à l'action d'une dépression à travers l'élément filtrant (50), pour aspirer du gaz hors de la chambre transporteuse (10, 12) et remplir, lorsque la sortie (18, 20) est fermée, la chambre transporteuse (10, 12) de matière provenant du réservoir (6) par l'entrée (14, 16) ouverte, et qui peut être soumise à l'action d'un gaz sous pression pour pousser, lorsque l'entrée (14, 16) est fermée, la matière aspirée dans la chambre transporteuse (10, 12) dans le conduit de transport (28) par la sortie (18, 20) ouverte, l'élément filtrant (50) étant réalisé sous la forme d'un cylindre creux et entourant au moins une partie de la chambre transporteuse (10, 12),
l'entrée (14, 16) et la sortie (18, 20) étant disposées à des extrémités frontales opposées de la chambre transporteuse (10, 12),
l'élément filtrant (50) étant entouré d'un boîtier (52), qui est séparé de l'élément filtrant (50) par un espace annulaire (54) cylindrique,
un premier branchement (104) étant disposé pour soumettre l'espace annulaire cylindrique (54) à l'action d'une dépression U et un second branchement (106) étant disposé pour soumettre l'espace annulaire cylindrique (54) à l'action d'air comprimé P,
**caractérisé en ce que**
le premier branchement (104) est disposé à proximité de l'extrémité frontale côté sortie de l'élément filtrant (50) et le second branchement (106) est disposé à proximité de l'extrémité frontale côté entrée de l'élément filtrant (50).

2. Dispositif selon la revendication 1, comprenant
une soupape de commande 5 voies (66), qui soumet sélectivement le premier branchement (104) à l'action d'une dépression U et le second branchement (106) à l'action d'une surpression,
un clapet antiretour (114, 116) sollicité par ressort avec une direction de montage inversée étant placé respectivement dans deux conduits de dérivation (110, 112) conduisant aux branchements (104, 106), de telle sorte que, lors de l'alimentation d'air comprimé dans un conduit (108), le clapet antiretour (116) disposé avant le branchement (106) s'ouvre contre la force de ressort, pendant que le clapet antiretour (114) disposé avant le branchement (104) reste fermé.

3. Dispositif selon la revendication 1, dans lequel l'entrée (14, 16) est reliée à un réservoir (6) de peinture en poudre (4), de la peinture en poudre (4) est remplie dans la chambre transporteuse (10, 12), quand le premier branchement (104) est soumis à l'action d'une dépression U, et de la peinture en poudre peut être vidée de la chambre transporteuse (10, 12) quand le second branchement (106) est soumis à l'action d'air comprimé.

4. Procédé de transport pneumatique de matière pulvérulente, comprenant les étapes consistant à :
- alternativement remplir une chambre transporteuse (10, 12) cylindrique avec de la matière pulvérulente, par l'entrée (14, 16) de la chambre transporteuse (10, 12), ladite chambre transporteuse pouvant être reliée à un réservoir (6) à un conduit de transport (28) par une entrée (14, 16) pouvant être fermée, et vider la matière pulvérulente de la chambre transporteuse (10, 12) par une sortie (18, 20), qui est disposée sur une extrémité frontale opposée de la chambre transporteuse (10, 12), pour un transport axial de la matière pulvérulente par la chambre transporteuse (10, 12) ;
- soumettre, avec la sortie (18, 20) fermée et l'entrée (14, 16) ouverte, la chambre transporteuse (10, 12) à l'action d'une dépression U à travers une paroi de limitation formée par un élément filtrant (50) perméable aux gaz, au niveau d'un premier branchement (104), pour aspirer, par l'entrée (14, 16), de la matière pulvérulente hors du réservoir (6) dans la chambre transporteuse (10, 12),
- soumettre, avec l'entrée (14, 16) fermée et la sortie (18, 20) ouverte, la chambre transporteuse (10, 12) à l'action d'air comprimé, au niveau d'un second branchement (106), pour pousser dans le conduit de transport (28), par la sortie (18, 20), la matière pulvérulente aspirée dans la chambre transporteuse (10, 12),
le premier branchement (104) étant disposé à proximité de l'extrémité frontale côté sortie de l'élément filtrant (50) et le second branchement (106) étant disposé à proximité de l'extrémité frontale côté entrée de l'élément filtrant (50), l'élément filtrant (50) étant réalisé sous la forme d'un cylindre creux et entourant au moins une partie de la chambre transporteuse (10, 12).
